# EUROPÄISCHE PATENTANMELDUNG

(11) **EP 3 929 390 A1**
(43) Veröffentlichungstag der Anmeldung: **29.12.2021**
(21) Anmeldenummer: 20182656.7
(22) Anmeldetag: 26.06.2020
(51) Int. Cl.: E06B 3/663, E06B 5/16, E06B 3/66

(54) **BRANDSCHUTZVERGLASUNG UMFASSEND RANDVERBUND MIT KÜHLENDER BRANDSCHUTZEIGENSCHAFT**

(71) Anmelder: SAINT-GOBAIN GLASS FRANCE, 92400 Courbevoie (FR)
(72) Erfinder: REINHARDT, Nikita, 67330 Kirrwiller (FR); SCHWANKHAUS, Norbert, 52499 Baesweiler (DE); KORUS, Jerome, 52076 Aachen (DE)
(74) Vertreter: Frei Patent Attorneys

(57) **Zusammenfassung**

Brandschutzverglasung (1) aus wenigstens zwei Glasscheiben (2), welche durch einen Abstandhalter voneinander beabstandet sind. In einem Zwischenraum zwischen den beiden Glasscheiben (2) sind ein Brandschutzmaterial (3) und der Abstandhalter (4) angeordnet. Ein Randverbund (5) umschliesst das Brandschutzmaterial (3) und den Abstandhalter (4) in dem Zwischenraum. Der Randverbund (5) weist eine kühlende Brandschutzeigenschaft auf und ist frei von einer schäumenden Brandschutzeigenschaft. Im Zwischenraum zwischen den beiden Glasscheiben (2) kann ausschliesslich das Brandschutzmaterial (3), der Abstandhalter (4) - gegebenenfalls mit einer optionalen Abstandshalterbefestigung zum Befestigen des Abstandhalters (4) an der Glasscheibe (2) - und der Randverbund (5) angeordnet sein.

## Beschreibung

Die Erfindung bezieht sich auf das Gebiet von Brandschutzverglasungen, welche wenigstens zwei Glasscheiben und ein dazwischen angeordnetes Brandschutzmaterial umfassen. Sie bezieht sich auf eine Brandschutzverglasung gemäss dem Oberbegriff des entsprechenden unabhängigen Patentanspruchs.

Insbesondere ist mit Brandschutzverglasung ein mindestens teilweise lichtdurchlässiger Teil einer Brandschutzverglasung gemeint, also eine Brandschutzverglasung frei von Rahmen, Halterung und/oder anderen Elementen, welche den lichtdurchlässigen Teil umgeben. Oder anders ausgedrückt ist mit Brandschutzverglasung insbesondere eine sandwichartig aufgebaute Brandschutzscheibe ohne Rahmen oder Halterung gemeint.

Brandschutzverglasungen, welche zwischen Glasscheiben eingeschlossenes Brandschutzmaterial umfassen, sind bereits in verschiedenen Ausführungsformen bekannt. Um das Brandschutzmaterial zwischen den Glasscheiben zu halten, weisen bekannte Brandschutzverglasungen eine Versiegelung auf. Die Versiegelung schirmt das Brandschutzmaterial vor äusseren Einflüssen ab und schützt es dadurch beispielsweise vor Alterungsprozessen.

Bekannte Versiegelungen umfassen häufig einen Abstandhalter, welcher zwischen den Glasscheiben angeordnet ist und welcher eine Beabstandung der Glasscheiben gewährleistet. Der Abstandhalter wird auch als primäre Versiegelung bezeichnet.

Bekannte Versiegelungen umfassen häufig auch einen Randverbund, welcher durch den Abstandhalter beabstandete Glasscheiben unverrückbar zueinander befestigt. Der Randverbund wird auch als sekundäre Versiegelung bezeichnet.

Der Abstandhalter und der Randverbund zusammen umschliessen das Brandschutzmaterial zwischen den Glasscheiben.

Die bekannten Brandschutzverglasungen haben den Nachteil, dass Ränder der Brandschutzverglasung hinsichtlich des Brandschutzes eine geringere Effizienz aufweisen können als von den Rändern entfernte Teile der Brandschutzverglasung. Die Brandschutzwirkung der Brandschutzmasse kann etwa nicht bis zum Rand wirken. Zudem sind Ränder der Brandschutzverglasung häufig besonders stark beanspruchte Teile der Brandschutzverglasung. Beispielsweise können an den Rändern der Brandschutzverglasung im Brandfall hohe Temperaturen entstehen. Als anderes Beispiel kann Wärmestrahlung im Brandfall an den Rändern der Brandschutzverglasung verstärkt durchdringen. Beispielsweise können Flammen einen Weg bei den Rändern der Brandschutzverglasung um die Brandschutzverglasung herum finden.

Weil die Versiegelung Platz beansprucht, kann das Brandschutzmittel nicht bis ganz an die Ränder der Brandschutzverglasung zwischen den Glasscheiben eingebracht werden. Auch das Material von Abstandhalter und/oder Versiegelung kann hinsichtlich des Brandschutzes eine Schwachstelle ausbilden. Beispielsweise, indem die Versiegelung selber brennt oder brennbare Stoffe abgibt.

Geprüfte Brandschutzelemente (wie die erfindungsgemässe Brandschutzverglasung) müssen, um als solche anerkannt zu werden, bei standardisierten Feuerwiderstandstests bestimmte Normen und Anforderungen erfüllen. Solche Normen werden beispielsweise durch die Europäische Norm EN 1363 (Stand Dezember 2013) und EN 1364 (Stand Dezember 2013) aufgestellt. Die EN 1363 stellt allgemeine Grundsätze für die Bestimmung der Feuerwiderstandsdauer von verschiedenartigen Bauteilen auf, die unter genormten Bedingungen dem Feuer ausgesetzt werden. Gemäss EN 1363 liegt die Temperatur im Brandraum, also auf der feuerzugewandten Seite des Brandschutzelements, bereits nach 15 Minuten bei 700°C. EN 1364 legt Verfahren zur Bestimmung der Feuerwiderstandsdauer von nichttragenden Bauteilen fest. Die Norm DIN 4102 befasst sich mit dem Brandverhalten von Baustoffen.

Der Feuerwiderstand bzw. Brandwiderstand kann als Fähigkeit eines Bauteils betrachtet werden, eine wirksame Barriere gegen die Ausbreitung von Flammen, Rauch und heissen Gassen zu bilden und/oder die Transmission von Hitzestrahlung zu verhindern. Eine Feuerwiderstandsdauer ist als Mindestdauer in Minuten definiert, während der das Brandschutzelement bei der Prüfung nach genormten Prüfungsverfahren mit definierten Randbedingungen (EN 1364 und EN 1363) und unter einer bestimmten Temperaturbeanspruchung bestimmte (insbesondere genormte) Anforderungen erfüllt. Diese (insbesondere genormten) Anforderungen sind beispielsweise in EN 13505 aufgeführt bzw. definiert und ermöglichen die Klassifizierung von Brandschutzelementen. Die Feuerwiderstandsdauer ist somit ein Mass für die Brauchbarkeit der Konstruktion im Brandfall. Mit anderen Worten: während der Feuerwiderstandsdauer wird der Durchgang von Feuer durch das Brandschutzelement verhindert, also ein Raumabschluss unter Brandbedingungen (EN 1363 und EN 1364) sicherstellt. Zusätzlich zum Raumabschluss kann das Brandschutzelement noch weitere Funktionen erfüllen, wie beispielsweise eine Hitzeisolierung.

Die Feuerwiderstandsdauer, während welcher das gemäss den oben genannten Normen geprüfte Brandschutzelement entsprechende Kriterien bzw. Anforderungen erfüllt, erlaubt die Klassifizierung des Brandschutzelementes. Die Brandschutzelemente können wie folgt gemäss der Norm EN 13501 (Stand Dezember 2013) klassifiziert werden. Es werden beispielsweise die folgenden Klassen unterschieden:
Klassifikation E (Raumabschluss) klassifiziert raumabschliessende Konstruktionselemente danach, wie lange sie eine Dichtigkeit gegenüber Rauch und Heissgasen gewährleisten.
Klassifikation I (Isolation) spezifiziert die Hitzedämmungseigenschaften unter Brandeinwirkung (s.u. die Erklärungen zur Klassifikation EI).
Klassifikation EW (Wärmestrahlung) bezieht sich auf raumabschliessende Konstruktionselemente mit reduzierter Hitzestrahlung (<15kW/m²). Solche Konstruktionselemente können im Brandfall beispielsweise transparent bleiben oder eine opake Schutzschicht bilden.
Klassifikation EI (Raumabschluss & Isolation) spezifiziert raumabschliessende Konstruktionselemente danach, wie lange sie die Anforderungen an die Klasse E erfüllen und zusätzlich eine Isolation gegen Hitzeeinwirkung (Strahlung, Wärmeleitung) bilden. Dies erfolgt anhand der Feuerwiderstandsdauer, während welcher der mittlere Temperaturanstieg auf der Kaltseite 140°K und der maximale Temperaturanstieg auf der Kaltseite 180°K nicht überschritten werden dürfen. Die EI-Klassifikation ist somit nur anwendbar, wenn die Aussenseite des Brandschutzkonstruktionselementes auf der feuerabgewandten Seite (Kaltseite) über eine gewisse Zeit (Feuerwiderstandsdauer) unterhalb von 200°C bleibt, d.h. sich die Kaltseite maximal um 180 K erwärmt. Beispielsweise hält ein Brandschutzkonstruktionselement der Klasse EI 30 mindestens 30 Minuten einem Brand stand, und ein Brandschutzkonstruktionselement der Klasse EI 90 hält mindestens 90 Minuten einem Brand stand und limitiert während dieser Zeit die Temperatur auf der Kaltseite auf maximal 200°C. Im Stand der Technik werden Klassifikationen von EI 20 und höher im Allgemeinen erreicht durch eine im Brandfall opake Schutzschicht.

Klassifizierungszeiten werden für jede Klassifikation in Minuten angegeben, wobei die Klassifizierungszeiten: 10, 15, 20, 30, 45, 60, 90, 120, 180, 240 oder 360 zu verwenden sind. Die Feuerwiderstandsdauer ist damit mit mindestens 10 Minuten definiert. Im Allgemeinen erfüllt ein Brandschutzelement somit mindestens 10 Minuten die entsprechenden Kriterien bzw. Anforderungen (siehe Klassifizierung - EN 13501) für die Feuerwiderstandsdauer. Das Minimalkriterium ist dabei der Raumabschluss. Ein Brandschutzelement muss daher mindestens als E10 klassifiziert werden können.

Insbesondere bei den Rändern der Brandschutzverglasung kann sich je nach Einbettung der Brandschutzverglasung in ihre Umgebung (Wand, Halterung, Rahmen, angrenzende weitere Verglasung und dergleichen) im Brandfall eine schwache Schutzwirkung zeigen. Gerade an oberen Rändern von Brandschutzverglasungen, wo sich im Brandfall unter anderem durch Konvektion Hitze, Rauch, heisses Gas und/oder Flammen stauen, ist eine gute Brandschutzwirkung wichtig. Insbesondere durch eine brandbedingte Ausdehnung der Einbettung kann ein Teil der Brandschutzverglasung direkt in Kontakt mit Flammen geraten (wie etwa der Randverbund und/oder der Abstandhalter).

Häufig müssen für gute insgesamte Brandschutzeigenschaften also bekannte Brandschutzverglasungen aufwendig in ihre Umgebung eingebettet werden. Rahmen bzw. Halterungen für bekannte Brandschutzverglasungen weisen darum beispielsweise zusätzliche Elemente mit eigener Brandschutzwirkung auf. Dies bedingt teure und kompliziert konstruierte Rahmen und Halterungen für die bekannten Brandschutzverglasungen. Auch die Installation, also die Montage bzw. der Einbau der bekannten Brandschutzverglasung ist dadurch kompliziert und aufwendig.

Bereits bekannt sind Brandschutzverglasungen, an deren Rändern zusätzliche Brandschutzelemente vorgesehen sind. Eine derartige bekannte Brandschutzverglasung ist beispielsweise in EP0970930 offenbart. Die darin beschriebene Brandschutzverglasung weist an deren Rändern zwischen zwei Glasscheiben sowohl einen Abstandhalter und eine Versiegelung als auch ein expandierendes Band auf. Das expandierende Band kann unter hohen Temperaturen sein Volumen um mindestens sein dutzendfaches vergrössern. Auf diese Weise sollen im Brandfall allfällige Lücken zwischen der Brandschutzverglasung und angrenzenden Bauteilen (wie einer Wand oder einer weiteren Brandschutzverglasung) geschlossen werden, um heissen Gasen oder Flammen den Weg zu versperren.

Derartige bereits bekannte Brandschutzverglasungen weisen die Nachteile auf, nur mit erheblichem Mehraufwand und erheblichen Mehrkosten hergestellt werden zu können, denn zusätzliche Brandschutzelemente wie beispielsweise das expandierende Band müssen hergestellt, gelagert und zusätzlich eingebaut werden. Zudem ist die Konstruktion der Brandschutzverglasung kompliziert und dadurch anfällig für Produktionsfehler. Auch bei der Installation der Brandschutzverglasung muss besonderer Aufwand betrieben werden.

Es ist deshalb Aufgabe der Erfindung, eine Brandschutzverglasung der eingangs genannten Art zu schaffen, welche mindestens einen der oben genannten Nachteile mindestens teilweise behebt.

Diese Aufgabe löst eine Brandschutzverglasung mit den Merkmalen des entsprechenden unabhängigen Patentanspruchs. Vorteilhafte Ausführungen können den abhängigen Ansprüchen, der Beschreibung und/oder den Figuren entnommen werden.

Die erfindungsgemässe Brandschutzverglasung umfasst wenigstens zwei Glasscheiben, welche durch einen Abstandhalter voneinander beabstandet sind. In einem Zwischenraum zwischen den beiden Glasscheiben sind ein Brandschutzmaterial und der Abstandhalter angeordnet. Ein Randverbund umschliesst das Brandschutzmaterial und den Abstandhalter in dem Zwischenraum. Der Randverbund weist dabei eine kühlende Brandschutzeigenschaft auf und ist frei von einer schäumenden Brandschutzeigenschaft.

Im Rahmen dieser Anmeldung wird der Begriff "umfassen" verwendet, um einen oder mehrere Bestandteile zu nennen (wobei auch weitere, nicht genannte Bestandteile vorhanden sein können). Anders ausgedrückt kann "umfassen" auch als "beinhalten" verstanden werden (ohne dabei abschliessend zu wirken wie "aus ... bestehen"). Der Begriff "umfassen" ist dabei ausdrücklich nicht zu verstehen als ein räumliches umschliessen bzw. ein räumliches einhüllen oder umgeben - für letzteres werden im Rahmen dieser Anmeldung die Begriffe "umschliessen" oder "einschliessen" verwendet.

Der Begriff Glasscheibe steht im Rahmen dieser Erfindung allgemein für eine transparente Scheibe aus glasartigem Material. Eine Glasscheibe kann Material auf Siliziumoxidbasis umfassen. Aber auch eine transparente Scheibe auf Polymerbasis wird als Glasscheibe bezeichnet, beispielsweise umfassend Polycarbonat und/oder Poly-Methyl-Methacrylat (PMMA; Acrylglas). Auch teilweise kristallines "Glas" (Keramikglas) fällt unter den Begriff Glasscheibe.

Der Begriff "Brandschutzverglasung" ist folglich funktionell und nicht als auf bestimmte Materialien (konkret: Glas im engeren Sinn) eingeschränkt zu verstehen, sondern beinhaltet ausdrücklich auch Aufbauten mit transparenten oder transluzenten Scheiben aus den vorstehend genannten und anderen Materialien.

Mit Brandschutzmaterial ist Material gemeint, welches im Falle eines Brandes seine Eigenschaften ändert und dadurch eine Ausbreitung des Brandes gehemmt, reduziert und/oder verhindert wird. Typische Beispiele für ein Brandschutzmaterial sind auf Silikat oder Hydrogel basierende Materialien, welche im Brandfall eine Isolation gegen Hitzeeinwirkung (Strahlung, Wärmeleitung) bilden. Beispielsweise kann ein Brandschutzmaterial durch Eintrübung, (Wärme-)Energieaufnahme und/oder Bildung von wärmeisolierenden Eigenschaften vor der Ausbreitung des Brandes schützen.

Die Formulierung "im Brandfall" bedeutet "im Falle eines Brandes". Also unter Bedingungen, welche im Falle eines Brandes herrschen. Dies kann sich beispielsweise auf einen entsprechend hohen Temperaturbereich, auf eine entsprechend hohe Wärmestrahlung, auf das Vorhandensein und/oder Fehlen von bestimmtem Gas und/oder auf das Vorhandensein von Flammen und/oder von Rauch beziehen.

Der Abstandhalter ist ein Element, welches zwischen den Glasscheiben angeordnet ist und welches die Glasscheiben beabstandet.

Brandschutzverglasungen der eingangs genannten Art können zwei, drei oder mehr Glasscheiben und dementsprechend einen, zwei oder mehr Zwischenräumen umfassen, jeweils mit einem Abstandhalter und Brandschutzmaterial. Beispielsweise wird bei einer Herstellung derartiger mehrschichtiger Brandschutzverglasungen jeweils nach einem Aufbringen eines Abstandhalters auf eine Glasscheibe die nächste Glasscheibe aufgelegt, und mit Hilfe einer mechanischen Presse wird ein solches Schichtenpaket auf eine gewünschte Solldicke des Zwischenraums zusammengepresst. Diese Solldicke des Zwischenraums darf sich nicht verändern, wenn nach dem Aufbringen eines nächstfolgenden Abstandhalters das Schichtenpaket einem erneuten Pressvorgang unterworfen wird, um den nächsten Zwischenraum auf die gewünschte Solldicke zusammenzupressen. Dies wird durch den Abstandhalter gewährleistet. Ausserdem soll der Abstandhalter auch im Brandfall seine Stabilität und seine Funktion des Beabstandens beibehalten.

Der Abstandhalter gewährleistet also einen bestimmten Abstand zwischen den Glasscheiben. Das bedeutet insbesondere, dass der Abstandhalter die Glasscheiben mindestens bei einer horizontalen Lagerung der Brandschutzverglasung in einem konstanten Abstand voneinander hält. Anders ausgedrückt hält der Abstandhalter insbesondere die Glasscheiben mindestens bis zu einem Druck voneinander beabstandet, welcher mindestens einem durch ein Eigengewicht einer Glasscheibe ausgeübten Drucks entspricht.

Das heisst, dass in einem einsatzbereiten Brandschutzglas der zwischen den Glasscheiben angeordnete Abstandhalter die Glasscheiben mit derselben Distanz voneinander beabstandet hält, selbst wenn in Richtung des Zwischenraums gerichtet ein Mindestdruck auf die Glasscheiben ausgeübt wird. Anders ausgedrückt ist der Abstandhalter mechanisch derart gegen den Mindestdruck von aussen auf die flächigen Seiten der Glasscheiben der Brandschutzverglasung resistent, dass die Glasscheiben einen unveränderten Abstand voneinander aufweisen. Der Mindestdruck entspricht dabei mindestens einem Druck, welcher durch ein Eigengewicht einer Glasscheibe ausgewirkt werden kann.

Der Abstandhalter kann ein- oder mehrteilig ausgebildet sein. Der Abstandhalter kann selber an einer oder mehreren Glasscheiben haften, und/oder der Abstandhalter kann an einer oder mehreren Glasscheiben befestigt - insbesondere geklebt - sein. Der Abstandhalter definiert einen Abstand zwischen den Glasscheiben und somit eine Dicke eines Zwischenraums zwischen den Glasscheiben.

Der Randverbund ist ein Element, welches die durch den Abstandhalter beabstandeten Glasscheiben relativ zueinander unverrückbar befestigt.

Der Randverbund hat also die Aufgabe, die Glasscheiben, welche durch den Abstandhalter voneinander distanziert sind, in dieser Position relativ zueinander zu fixieren. Das bedeutet insbesondere, dass der Randverbund die Glasscheiben miteinander verklebt.

Insbesondere bildet der Randverbund eine Wasserdampfsperre aus.

Der Abstandhalter und der Randverbund zusammen umschliessen das Brandschutzmaterial zwischen den Glasscheiben gasdicht. Insbesondere kann der Abstandhalter alleine das Brandschutzmaterial nicht gasdicht umschliessen.

Gasdicht bedeutet, dass der Randverbund keinen Wasserdampf und insbesondere keine Luft bzw. keinen Sauerstoff passieren lässt.

Der Randverbund umschliesst das Brandschutzmaterial und den Abstandhalter im Zwischenraum der Glasscheiben. Mit im Zwischenraum der Glasscheiben umschliessen ist gemeint, dass die Glasscheiben und der Randverbund zusammen das Brandschutzmaterial und den Abstandhalter räumlich vollständig umhüllen.

Damit der Randverbund die Glasscheiben unverrückbar miteinander verbinden bzw. unverrückbar zueinander befestigen kann, ist eine gute Haftung des Randverbundes an den Glasscheiben nötig.

Der Randverbund weist eine gute Glashaftung auf.

Insbesondere erlaubt eine gute Glashaftung ein Ausbilden einer gasdichten Verbindung mit einer Glasscheibe.

Insbesondere ist der Randverbund vollständig im Zwischenraum zwischen den Glasscheiben angeordnet.

Der Randverbund kann mindestens teilweise im Zwischenraum zwischen den Glasscheiben angeordnet sein.

Beispielsweise kann der Randverbund vollständig ausserhalb des Zwischenraums angeordnet sein, etwa die Stirnseiten der Glasscheiben verbindend.

Der Randverbund kann eine polymerbasierte Grundmasse umfassen. Die polymerbasierte Grundmasse umfasst beispielsweise Epoxid, Polyurethan, Silikon, Polysulfid, Acryl und/oder ein eine heisse Schmelze ausbildendes Material, beispielsweise Butyl. Diese Grundmasse kann wiederum organisches und/oder anorganisches Material mit schäumender Brandschutzeigenschaft umfassen.

Eine kühlende Brandschutzeigenschaft ist eine Eigenschaft des Randverbundes, im Falle eines Brandes - beispielsweise durch Umwandlung von Energie - aktiv kühlend zu wirken und durch diesen kühlenden Effekt im Brandfall zu schützen.

Das bedeutet, dass bei einem Brand der Randverbund mit kühlenden Brandschutzeigenschaften einen brandschützenden Effekt hinsichtlich der Temperatur bewirkt: es wird eine absolute Temperatur reduziert und/oder eine Temperaturzunahme wird reduziert oder verhindert. Dies wird im Rahmen dieser Erfindung als kühlende Brandschutzeigenschaft oder auch als aktiv kühlend bezeichnet.

Insbesondere wird dabei Wärmeenergie in eine von Wärmeenergie unterschiedliche Energie umgewandelt.

Insbesondere ist die Umwandlung von Energie der Haupteffekt, welcher die kühlende Brandschutzeigenschaft ausmacht.

Eine kühlende Brandschutzeigenschaft kann beispielsweise durch einen endothermen Prozess, Abspaltung von Wasser oder einer anderen Flüssigkeit und/oder durch Verdampfen von Wasser oder einer anderen Flüssigkeit (Verdampfungsenthalpie) erzielt werden. Auf diese Weise wird Energie umgewandelt, also eine aktiv kühlende Wirkung erzielt. Umwandlung von Energie kann auch als Aufnahme bzw. Absorption von Energie oder Verbrauch von Energie bezeichnet werden. Bei der Umwandlung von (Wärme-)Energie wird diese (Wärme-)Energie in eine andere Form der Energie überführt und so dem System entzogen.

Ein rein isolierender Effekt, welcher einen Wärmedurchgang bzw. Wärmetransport reduziert oder verhindert, ist hingegen keine kühlende Brandschutzeigenschaft. Eine solche isolierende Wirkung kann zwar durch die Reduktion oder Verhinderung des Wärmedurchgangs einen Temperaturanstieg reduzieren oder verhindern und somit vielleicht sogar als passiv kühlend bezeichnet werden. Aber bei der isolierenden Wirkung wird keine aktiv kühlende Wirkung erzielt, beispielsweise keine Energie umgewandelt. Und aus diesem Grund wird die isolierende Wirkung im Rahmen dieser Erfindung nicht als kühlende Brandschutzeigenschaft verstanden.

In der folgenden Tabelle sind Materialien aufgelistet, welche vom Randverbund umfasst werden können, um eine kühlende Brandschutzeigenschaft zu erzielen (x bzw. y steht dabei für eine beliebige Zahl):

| Metallhydroxide | Al(OH)₃, Mg(OH)₂, Ca(OH)₂ |
|---|---|
| Wasserhaltige Metallsalze | **Allgemeine Formel** |
| | (Metall)ₓ (Salz)_{y} x(H₂O) Kann mindestens eine Salz- und eine Metallkombination sein Nicht erschöpfende Liste/Beispiele unten |
| | **Wasserhaltige Carbonatsalze** |
| | Magnesiumcarbonatpolyhydrat: MgCO₃. xH₂O Huntit: Mg₃Ca[CO₃]₄ |
| | Mg₅(CO₃)₄(OH)₂.xH₂O (x=4: Hydromagnesit) |
| | Ablagerung von Hydromagnesit und Huntit ("Ultracarb") |
| | Magnesiumcarbonathydroxid - pentahydrat: (MgCO₃)₄Mg(OH)₂.xH₂O (MCHP) |
| | NaAI(OH)₂CO₃ (Dawsonit) Kaliumcarbonat: K₂CO3.xH₂O |
| | **wasserhaltige Sulfatsalze** |
| | MgSO₄.xH₂O |
| | Gips: CaSO₄.xH₂O |
| | **wasserhaltige Sulfitsalze** |
| | Nitrogensulfit: Na₂SO3.xH₂O |
| | **Wasserhaltige Bor-Verbindungen** |
| | Zinkborat |
| | Borphosphat |
| | Borsiloxan |
| | B₂O₃ |
| | **Wasserhaltige PhosphorVerbindungen** |
| | Salze der Phosphorsäure Magnesiumphosphatpolyhydrat: Mg₃(PO₄)₂.xH₂O Aluminiumphosphatpolyhydrat Manganhypophosphit Ceriumphosphat |
| weitere anorganische, wasserhaltige Verbindungen | Natriumacetatpolyhydrat: CH₃COONa.xH₂O |
| | Bohemit: AlO(OH) Magnesiumchlorid |
| | Silsesquioxan, Sepiolit (Meerschaum), Zink- und Nickelsalze, Salicylaldehyd, Salicylaldoxim, Colemanit ZnS, ZnSn(OH)₆, ZHS CeNO₃ |
| Organische, wasserhaltige Verbindungen | Salze organischer Säuren: |
| | Salze der Zitronensäure |
| | Salze der Weinsäure |
| | Salze der meso-Weinsäure |
| | Salze der Gluconsäure |

Der Randverbund kann zum Erzielen seiner kühlenden Brandschutzeigenschaft eines oder mehrere der Materialen aus der obigen Tabelle umfassen.

Beispielsweise weist eine Zusammensetzung des Randverbundes mit kühlenden Brandschutzeigenschaften 50 Gewichtsprozent Polysulfide und 50 Gewichtsprozent Aluminiumtrihydroxid auf.

Eine schäumende Brandschutzeigenschaft ist eine Eigenschaft des Randverbundes, im Falle eines Brandes aufzuschäumen und dadurch im Brandfall zu schützen. Das bedeutet, dass bei einem Brand der Randverbund Schaum bildet, welcher beim Brand Schutzfunktion hat. Als Schaum werden gasförmige Bläschen bezeichnet, die von festen oder flüssigen Wänden eingeschlossen sind.

Die schäumende Brandschutzeigenschaft basiert auf einer Fähigkeit von Material, bei einem Auftreten von hohen Temperaturen anzuschwellen bzw. aufzuschäumen und einen wärmeisolierenden Schaum auszubilden.

Der durch die schäumende Brandschutzeigenschaft gebildete Schaum kann durch einen isolierenden Effekt, welcher einen Wärmedurchgang bzw. Wärmetransport reduziert oder verhindert, einen Temperaturanstieg reduzieren oder verhindern, insbesondere auf einer feuerabgewandten Seite (auch bezeichnet als Kaltseite oder Schutzseite).

Der durch die schäumende Brandschutzeigenschaft gebildete Schaum kann im Brandfall allfällige Lücken zwischen der Brandschutzverglasung und angrenzenden Bauteilen (wie einer Wand oder einer weiteren Brandschutzverglasung) mindestens teilweise schliessen, um heissen Gasen oder Flammen den Weg mindestens teilweise zu versperren.

Die Brandschutzeigenschaft des gebildeten Schaums ist der Haupteffekt der schäumenden Brandschutzeigenschaft. Eine allfällige Brandschutzwirkung des Vorganges des Aufschäumens an sich ist dazu im Vergleich vernachlässigbar.

Anders ausgedrückt: beim Aufschäumen, also während der Bildung des durch die schäumende Brandschutzeigenschaft gebildeten Schaums, kann zwar eine vergleichsweise geringe Menge an Energie aufgenommen bzw. umgewandelt werden. Dieser Effekt ist aber vernachlässigbar im Vergleich mit dem Effekt der Brandschutzeigenschaft des fertig ausgebildeten Schaums. Darum wird im Rahmen dieser Erfindung die schäumende Brandschutzeigenschaft als nicht aktiv kühlend bezeichnet.

Der Randverbund weist eine kühlende Brandschutzeigenschaft auf, und der Randverbund ist frei von einer schäumenden Brandschutzeigenschaft. Das heisst, dass der Randverbund keine schäumende Brandschutzeigenschaft aufweist, aber eine kühlende Brandschutzeigenschaft.

Der Vorteil der erfindungsgemässen Brandschutzverglasung liegt darin, dass die Brandschutzverglasung durch die kühlende Brandschutzfunktion des Randverbundes gute Brandschutzeigenschaften aufweist. Gleichzeitig ist der Aufbau des Brandschutzglases einfach und kommt ohne zusätzliche Elemente aus.

Die Brandschutzverglasung macht zusätzliche Brandschutzelemente überflüssig, obwohl zusätzlicher Brandschutz bewirkt wird.

Insbesondere weisen die Ränder der Brandschutzverglasung gute Brandschutzeigenschaften auf. Gerade an den Rändern der Brandschutzverglasung sind gute Brandschutzeigenschaften von grossem Vorteil, weil an den Rändern selber sowie zwischen den Rändern und angrenzenden Bauteilen häufig im Brandfall eine schwache Brandschutzwirkung besteht. Anders ausgedrückt weist die erfindungsgemässe Brandschutzverglasung vorteilhafterweise eine gute Brandschutzwirkung an den Rändern der Brandschutzverglasung auf, und dadurch im Bereich der Einbettung der Brandschutzverglasung in ihre Umgebung.

Insbesondere obere Ränder von Brandschutzverglasungen, welche im Brandfall besonders starken Effekten des Brandes ausgesetzt sind, weisen durch den kühlenden Randverbund eine gute Brandschutzwirkung auf.

Ein Einbau dieser Brandschutzverglasung mit kühlendem Randverbund ermöglicht eine einfache und kostengünstige Montage im Rahmensystem ohne zusätzliche schäumend oder kühlende Bänder. Die einfache Bauweise macht die Brandschutzverglasung robust und wenig anfällig für Einbaufehler. Die Brandschutzverglasung kann ohne Mehraufwand installiert werden.

Weil die Brandschutzverglasung gute Brandschutzeigenschaften an deren Rändern aufweist, kann die Umgebung der installierten Brandschutzverglasung und insbesondere eine Halterung oder ein Rahmen für die Brandschutzverglasung einfach gehalten werden und ohne zusätzliche Brandschutzelemente und/oder -massnahmen ausgebildet sein, ohne dabei den Brandschutz zu schwächen. Dies erlaubt eine Verwendung von günstig herstellbaren, einfach und robust aufgebauten an die Brandschutzverglasung angrenzenden Elementen. Das Einsetzen und die Montage der Brandschutzverglasung kann dadurch vereinfacht werden. Die Gesamtkonstruktion (Brandschutzverglasung und ihre Umgebung) kann einfach gehalten werden, was sich vorteilhaft auf Produktions-, Installations- und Wartungskosten der Gesamtkonstruktion auswirkt.

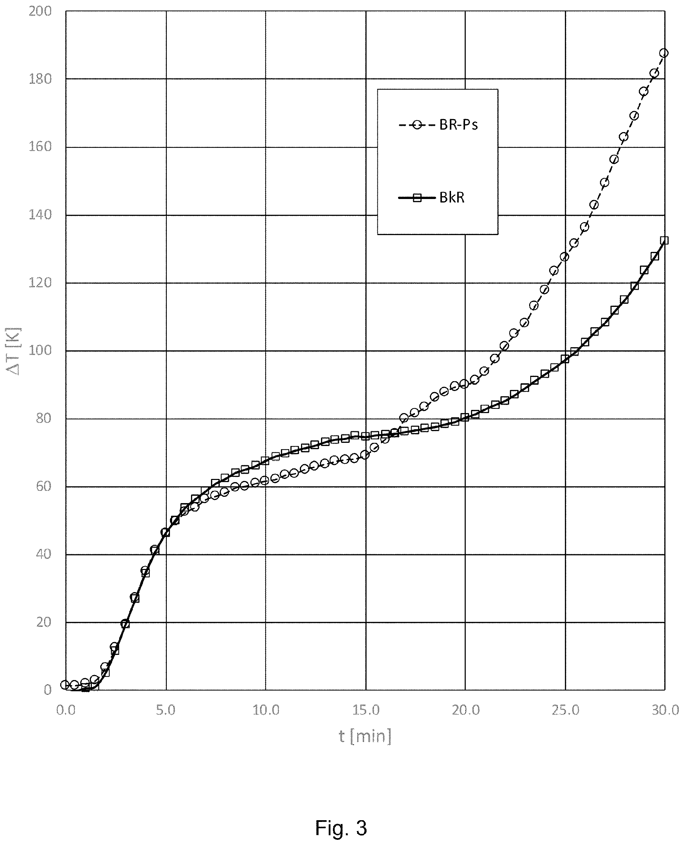

Tests haben gezeigt, dass die erfindungsgemässe Brandschutzverglasung (also mit Randverbund mit kühlendem Brandschutzeigenschaften) im Vergleich mit einer gleichartigen doppelglasigen und mit demselben Brandschutzmaterial befüllten Brandschutzverglasung, jedoch mit Randverbund ohne kühlende Brandschutzeigenschaften, unter identischen Bedingungen deutlich besseren Brandschutz bewirkt. Ein entsprechender Benchmarktest ist weiter unten beschrieben und in Figur 3 gezeigt.

Weitere bevorzugte Ausführungsformen gehen aus den abhängigen Patentansprüchen hervor.

Optional sind im Zwischenraum zwischen den beiden Glasscheiben ausschliesslich das Brandschutzmaterial, der Abstandhalter und der Randverbund angeordnet. Dabei kann im Zwischenraum eine optionale Abstandshalterbefestigung zum Befestigen des Abstandhalters an der Glasscheibe angeordnet sein.

Mit Abstandhalterbefestigung sind Befestigungsmittel gemeint, um den Abstandhalter an einer oder mehreren Glasscheiben zu befestigen. Beispielsweise kann Klebstoff als Abstandhalterbefestigung dienen.

Durch eine Anordnung von ausschliesslich Brandschutzmaterial, Abstandhalter (ggf. mit Abstandhalterbefestigung) und Randverbund im Zwischenraum weist die Brandschutzverglasung wenige Elemente im Zwischenraum auf. Dies vereinfacht die Herstellung der Brandschutzverglasung und erlaubt tiefe Herstellungskosten.

Durch Verzicht auf zusätzliche Elemente im Zwischenraum kann der Zwischenraum weit bis zum Rand der Brandschutzverglasung mit Brandschutzmaterial gefüllt sein. Eine kompakte Versiegelung, umfassend lediglich Abstandhalter (ggf. mit Abstandhalterbefestigung) und Randverbund, erlaubt es, den Zwischenraum mit viel Brandschutzmittel zu befüllen, was sich positiv auf die Brandschutzeigenschaften der Brandschutzverglasung auswirkt. Viel Brandschutzmittel kann eine hohe Brandschutzwirkung erzielen. Viel Brandschutzmittel an den Rändern bzw. kleine Ränder ohne Brandschutzmittel bewirken gerade im wichtigen Randbereich von Brandschutzverglasungen eine gute Brandschutzwirkung.

Mit wenigen Elementen im Zwischenraum kann die Brandschutzverglasung einen grossen transparenten Bereich aufweisen. Denn das Brandschutzmaterial im Zwischenraum ist vor einem Brandfall transparent, also durchsichtig für Licht mit Wellenlängen in einem für Menschen mit blossem Auge sichtbaren Bereich. Abstandhalter und Randverbund sind meist nicht transparent. Bei kompakter Ausbildung von Abstandhalter und Randverbund kann der intransparente Rand der Brandschutzverglasung klein gehalten werden. Die hat neben technischen Vorteilen (beispielsweise gute Sicht, grosse Sichtwinkel, viel Lichtdurchlass, architektonisch gut einfügbar, klein ausfallende Oberflächenstrukturierung) auch kommerzielle Vorteile (bessere Verkaufsargumente) und ästhetische Vorteile.

Alternativ können weitere Elemente im Zwischenraum angeordnet sein.

Optional ist der Randverbund in einem Bereich des Zwischenraums angeordnet ist, welcher an die Stirnseiten der Glasscheiben angrenzt.

Anders ausgedrückt füllt der Randverbund den äussersten Rand des Zwischenraums der Brandschutzverglasung bis in einen Bereich angrenzend an die Stirnseiten der Glasscheiben. Dabei kann der Randverbund bündig mit den Stirnseiten der Glasscheiben im Zwischenraum angeordnet sein. Oder der Randverbund ist ein wenig nach innen in den Zwischenraum zurückversetzt angeordnet. Alternativ ragt der Randverbund ein wenig über die Stirnseiten der Glasscheiben hinaus. Mit wenig ist in diesem Zusammenhang maximal 5 Millimeter gemeint. Insbesondere heisst wenig in diesem Zusammenhang maximal 3 Millimeter. Auch maximal 1 Millimeter kann unter wenig verstanden werden.

Alternativ kann der Randverbund deutlich von den Stirnseiten zurückversetzt oder deutlich über die Stirnseiten hinausragend angeordnet sein.

Optional umfasst der Randverbund ein Material, welches im Brandfall Gas freisetzt und auf diese Weise mindestens einen Teil der kühlenden Brandschutzeigenschaft des Randverbundes erzielt.

Das vom Randverbund im Brandfall freigesetzte Gas kann den Effekt haben, für die Flammen verfügbaren Sauerstoff zu reduzieren oder zu eliminieren, und/oder brennbares bzw. heisses Gas zu verdünnen. Das freigesetzte Gas kann also einen kühlenden Effekt haben, weil es Brennstoff und/oder Sauerstoff reduziert oder eliminiert und/oder heisse Gase verdünnt. Beispielsweise erfolgt dieser kühlende Effekt zusätzlich zu einer Umwandlung von Wärmeenergie. Das vom Randverbund freigesetzte Gas ist beispielsweise Wasserdampf oder Kohlendioxid.

Alternativ kann der Randverbund frei von einer Gasfreisetzung im Brandfall ausgebildet sein.

Optional setzt der Randverbund im Brandfall aufgrund eines Zerfalls eines Materials des Randverbundes Gas frei.

Die Gasfreisetzung im Brandfall durch Zerfall von nur einem Material des Randverbundes hat den Vorteil, dass das zu zerfallende Material unabhängig von weiteren Bestandteilen bzw. Materialien des Randverbundes alleine für sich im Brandfall reagieren kann. Diese Art der Gasfreisetzung ist einfach und ausfallsicher. Nur eine einzige bestimme Sorte von Zusatzmaterial wird für eine entsprechende Art von Randverbund benötigt. Es können auch mehrere Sorten von Zusatzmaterial mit dieser Eigenschaft verwendet werden. Ein Beispiel für ein solches Material ist Aluminiumtrihydroxid (Al(OH)₃), welches zerfällt und dabei Gas freisetzt.

Alternativ kann der Randverbund frei von einer Gasfreisetzung im Brandfall durch Zerfall von Material im Randverbund ausgebildet sein.

Optional setzt der Randverbund im Brandfall Gas frei aufgrund eines Zerfalls von mindestens zwei Materialien des Randverbundes, welche voneinander unterschiedliche Gasfreisetzungstemperaturen aufweisen.

Die Gasfreisetzung im Brandfall durch einen Zerfall von mehreren Materialien des Randverbundes, welche unterschiedliche Gasfreisetzungstemperaturen aufweisen, hat den Vorteil, dass im Brandfall die Gasfreisetzung über einen breiten Temperaturbereich erfolgt.

Die Gasfreisetzungstemperatur ist die Temperatur, ab welcher ein Material Gas freisetzt (diese wird manchmal auch als Anspringtemperatur bezeichnet). Die zerfallenden Materialien können ganz spezifisch ausgesucht und kombiniert werden für ganz bestimmte Einsatzzwecke und die entsprechenden Temperaturbereiche.

Beispielsweise kann eine spezifische Auswahl und ein spezifisches Mischungsverhältnis von ganz bestimmten Materialien eine besonders hohe Gasfreisetzungsrate in einem ganz bestimmten Temperaturbereich aufweisen, welcher von einem Material alleine nicht abgedeckt werden kann. Oder es kann eine möglichst gleichmässige Gasfreisetzungsrate in einem möglichst breiten Temperaturbereich erzielt werden.

Beispielsweise kann eine spezifische Auswahl und ein spezifisches Mischungsverhältnis von ganz bestimmten Materialien verschiedene, für einen Anwendungsfall in Kombination besonders effiziente Gase freisetzen.

Zum Beispiel kann der Randverbund einerseits Mg(OH)₂ (mit einer Gasfreisetzungstemperatur von 320 Grad Celsius, wobei Gas bis 420 Grad Celsius freigesetzt wird) und andererseits Ca(OH)₂ (mit einer Gasfreisetzungstemperatur von 400 Grad Celsius, wobei Gas bis 600 Grad Celsius freigesetzt wird) umfassen.

Alternativ kann der Randverbund frei sein von einer Gasfreisetzung im Brandfall aufgrund eines Zerfalls von mindestens zwei Materialien des Randverbundes, welche voneinander unterschiedliche Gasfreisetzungstemperaturen aufweisen.

Optional umfasst der Randverbund ein Material mit endothermen Eigenschaften, welches im Brandfall dank dessen endothermen Eigenschaften Wärmeenergie aufnimmt und auf diese Weise mindestens einen Teil der kühlenden Brandschutzeigenschaft des Randverbundes erzielt.

Die endotherme Eigenschaft des Materials im Randverbund bewirkt im Brandfall eine endotherme Reaktion im Randverbund. Auf diese Weise wird der Umgebung dieses Materials Wärmeenergie entzogen, was eine kühlende Wirkung auf die Umgebung dieses Materials hat. Also wird im Randverbund und um den Randverbund herum eine kühlende Wirkung erzielt. Beispielsweise ist Huntit ein solches Material mit endothermen Eigenschaften. Eine Ablagerung von Hydromagnesit und Huntit ist ein anderes Beispiel.

Alternativ kann der Randverbund frei von einem Material mit endothermen Eigenschaften im Brandfall ausgebildet sein.

Optional kann der Randverbund ein synergistisches Material umfassen.

Mit synergistischem Material wird ein Material bezeichnet, welches (beispielsweise bereits schon in kleinen Mengen) zu einem anderen Material hinzugefügt eine deutliche oder sogar drastische Verstärkung eines Effekts des anderen Materials bewirkt. Synergistisch bedeutet, dass ein kombinierter Effekt zweier Materialien grösser ist als eine Summe von Effekten beider Materialien alleine.

In Bezug auf die kühlende Brandschutzeigenschaft können insbesondere folgende synergistische Effekte (alleine oder in Kombination) erzielt werden:
- Freisetzung von mehr Gas
- endothermer Zerfall
- solid state diluent
- Reduktion einer für eine Polymerzersetzung zur Verfügung stehenden Energiemenge
- verbesserte thermische Stabilität
- Bildung und/oder Verstärkung der thermisch isolierenden Schutzschicht
- Verbesserung der mechanischen Eigenschaften der thermisch isolierenden Schutzschicht, insbesondere der Verkohlungsschicht
- Verbesserung der Kohlequalität hinsichtlich der Wärmedämmung der Verkohlungsschicht
- Änderungen der Kohlestruktur (Nanostruktur) in der Verkohlungsschicht
- Erhöhung der Energieabsorbtion
- Erhöhung der maximal erreichbaren Menge von verkohltem Material im Randverbund
- Verbesserte Flammenhemmung
- Rauchunterdrückung
- Verringerung der Brennbarkeit bzw. Entflammbarkeit

Beispiele von möglichen synergistischen Materialien für eine kühlende Brandschutzeigenschaft des Randverbundes können der obenstehenden Tabelle der Beispiele der Materialien mit kühlenden Brandschutzeigenschaften entnommen werden. Diese Materialien können sich alleine oder in Kombination miteinander dafür eignen, um dem Randverbund zugesetzt einen synergistischen Effekt bezüglich der kühlenden Brandschutzeigenschaft zu erzielen.

Optional umfasst der Randverbund ein brandhemmendes Material, welches einen Anteil an weiterem Material im Randverbund reduziert.

Anders ausgedrückt ist dem Randverbund ein brandhemmendes Material eingefügt, welches durch sein Vorhandensein einen Anteil an brandgefährlichem Material im Randverbund senkt. Also ist durch Einbringen von brandhemmendem Material eine Menge eines anderen Materials im Randverbund, welches weniger brandhemmend ist, reduziert (solid state diluent). Brandhemmend heisst in diesem Zusammenhang, dass das Material selber schwer brennbar ist und im Brandfall beispielsweise keine oder wenig brennbaren Gase oder Stoffe freisetzt.

Das als solid state diluent eingesetzte Material kann einen synergistischen Effekt in Bezug auf Material mit kühlender Brandschutzeigenschaft erzielen.

Beispielsweise kann ein Aerogel als solid state diluent im Randverbund eingesetzt werden.

Alternativ kann der Randverbund frei sein von einem brandhemmenden Material, welches als solid state diluent wirkt.

Optional umfasst der Randverbund ein Material, welches im Brandfall eine thermisch isolierende Schutzschicht ausbildet.

Eine solche thermisch isolierende Schutzschicht kann einen synergistischen Effekt in Bezug auf Material mit kühlender Brandschutzeigenschaft erzielen

Das Ausbilden einer thermisch isolierenden Schutzschicht im Brandfall hat den Effekt, dass Flammen und Hitze durch diese Schutzschicht gehemmt werden. Insbesondere kann eine solche Schutzschicht im Randverbund ein Eindringen von Flammen und/oder Hitze von den Rändern der Brandschutzverglasung her in einen Zwischenraum zwischen Brandschutzverglasung und dessen Umgebung minimieren oder verhindern. Weniger Hitze und/oder Flammen reduziert temperaturbedingten Zerfall beispielsweise des Brandschutzmaterials und/oder des Abstandhalters im Zwischenraum.

Die thermisch isolierende Schutzschicht ist insbesondere eine Verkohlungsschicht.

Alternativ kann der Randverbund frei sein von einem Material, welches im Brandfall eine thermisch isolierende Schutzschicht ausbildet.

Alternativ kann der Randverbund frei von einem synergistischen Material ausgebildet sein.

Die optionalen Merkmale können alleine oder auch kombiniert in der erfindungsgemässen Brandschutzverglasung vorhanden sein.

Beispielsweise kann die kühlende Brandschutzeigenschaft des Randverbundes alleine auf der Freisetzung von Gas beruhen. Oder der Randverbund kann im Brandfall Gas freisetzen und gleichzeitig Material mit endothermen Eigenschaften umfassen, also eine Kombination von Gasfreisetzung und endothermer Reaktion aufweisen. Insbesondere ist auch der Einsatz eines synergistischen Materials beliebig mit anderen Merkmalen mit kühlenden Brandschutzeigenschaften kombinierbar.

Im Folgenden wird der Erfindungsgegenstand anhand eines bevorzugten Ausführungsbeispiels, welches in den beiliegenden Zeichnungen dargestellt ist, näher erläutert. Es zeigen jeweils schematisch:
- Figur 1: einen Schnitt durch einen oberen Teil einer erfindungsgemässen Brandschutzverglasung in Seitenansicht;
- Figur 2: die Brandschutzverglasung aus Figur 1 in derselben Ansicht, installiert in einem Rahmen,
- Figur 3: Temperaturverlauf einer Testmessung.

Grundsätzlich sind in den Figuren gleiche Teile mit gleichen Bezugszeichen versehen. Mit den Bezeichnungen links, rechts, unten und oben wird auf die Zeichnungsebene der Figuren Bezug genommen.

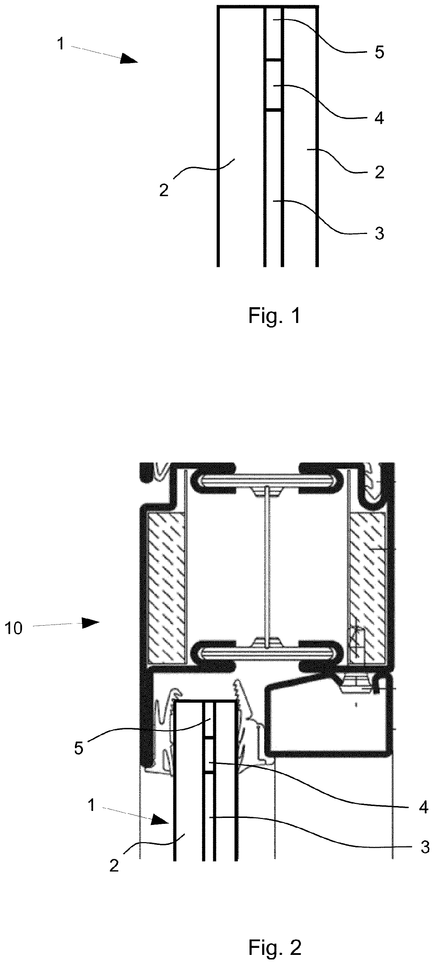

Die Figuren 1 und 2 zeigen dasselbe Ausführungsbeispiel der erfindungsgemässen Brandschutzverglasung 1. In beiden Figuren 1 und 2 ist jeweils ein Schnitt in Seitenansicht dargestellt. Zudem zeigen beide Figuren von der Brandschutzverglasung 1 jeweils nur den oberen Teil derselben. Das heisst, von einer senkrecht positionierten Brandschutzverglasung 1 (also parallel zur Gravitationsrichtung ausgerichtet) ist der obere Teil oder anders ausgedrückt ein oberes Ende der Brandschutzverglasung 1 dargestellt. Andere Randbereiche der Brandschutzverglasung 1 sind analog ausgebildet. Dasselbe trifft auf den Rahmen 10 in Figur 2 zu: es ist nur der obere Teil des Rahmens 10 dargestellt, die anderen Teile sind analog ausgebildet.

In Figur 1 ist ein Teil der Brandschutzverglasung 1 dargestellt. Zwei parallel angeordnete Glasscheiben 2 sind durch einen dazwischen angeordneten Abstandhalter 4 voneinander beabstandet. Zwischen den beiden Glasscheiben 2 und unterhalb des Abstandhalters 4 befindet sich ein Brandschutzmaterial 3. Vollständig zwischen den beiden Glasscheiben 2 und oberhalb des Abstandhalters 4 angeordnet ist ein Randverbund 5 angeordnet. Der Randverbund 5 endet oben bündig mit Stirnseiten der beiden Glasscheiben 2.

In Figur 2 ist derselbe Teil der Brandschutzverglasung wie in Figur 1 gezeigt, allerdings bereits installiert in einen Rahmen 10. In Figur 2 ist deutlich zu erkennen, dass den Brandschutzeigenschaften der Brandschutzverglasung 1 an deren Rändern (hier ist nur der obere Rand dargestellt) besondere Bedeutung zukommt. Im Randbereich der Brandschutzverglasung 1, wo sich der Randverbund 5 befindet, kann bei der installierten Brandschutzverglasung 1 zwischen Brandschutzverglasung 1 und Rahmen 10 im Brandfall Gas freigesetzt werden gerade dort verdünnend und kühlend wirken, wo sich konstruktionsbedingt Schwachstellen befinden. Und dies insbesondere am oberen Rand der Brandschutzverglasung 1, wo aufgrund von Konvektion im Brandfall besonders widrige Umstände vorliegen (viel Hitze, Flammen, Rauch) und gute Brandschutzeigenschaften besonders vorteilhaft und hilfreich sind. Der Randverbund 5 kann alternativ oder zusätzlich an dieser Stelle durch endothermen Eigenschaften Wärmeenergie aufnehmen, was ebenso vorteilhaft ist. Und/oder der Randverbund kann zusätzlich zur kühlenden Brandschutzeigenschaft eine thermisch isolierende Schutzschicht ausbilden, was an dieser Stelle auch vorteilhaft ist.

In einer Ausführungsform umfasst der Randverbund 5 einen Gewichtsanteil von 50% an Al(OH)₃. In dieser Ausführungsform kühlt der Randverbund 5 aufgrund von einer Freisetzung eines Gases (genauer gesagt von Wasserdampf). Der Wasserdampf verdünnt dabei heisse Brandgase und kühlt diese auf diese Weise herunter. Zudem ist durch diese Verdünnung weniger brennbares Material (Gas, Flüssigkeiten und Feststoffe) vorhanden, was ebenfalls einen kühlenden Effekt ausmacht. Gleichzeitig kann der hohe Gewichtsanteil von Al(OH)₃ im Randverbund 5 als solid state diluent wirken, wenn der Rest des Randverbundes 5 eine höhere Brandgefährlichkeit (Brennbarkeit oder Freisetzung von brennbarem Material) aufweist.

Figur 3 zeigt die Resultate eines Benchmarktests. Dabei wurde auf der brandabgewandten Seite der getesteten Brandschutzverglasungen ausserhalb der Halterung an einer oberen Ecke der Brandschutzverglasung eine Temperaturzunahme ΔT innerhalb von 30 Minuten gemessen. Die entsprechenden Temperaturzunahmen sind in Figur 3 dargestellt: die Temperaturzunahme ΔT (in Kelvin) der feuerabgewandten Seite (Kaltseite) der Brandschutzverglasung ist abhängig von der Zeit t (in Minuten) dargestellt, woraus sich die Feuerwiderstandsdauer ableiten lässt.

Der Benchmarktest wurde durchgeführt mit Brandschutzgläsern des Typs CF30, montiert in derselben Halterung (Janisol II Rahmensystem mit EPDM Dichtungen). Diese Halterung weist kein kühlendes und/oder schäumendes Zusatzelement auf. Nur der Randverbund wurde variiert. Die erfindungsgemässe Brandschutzverglasung BkR hat einen Randverbund aus den Materialien der untenstehenden Tabelle aufgewiesen, was dessen kühlende Brandschutzwirkung ausgemacht hat. Messwerte dieser Brandschutzverglasung BkR sind in Figur 3 durch leere Quadrate dargestellt, welche mit einer durchgehenden Linie verbunden sind.

| **Produkt** | **Gewichtsprozent (Gew.-%)** |
|---|---|
| Polysulfid von Fenzi | 50 |
| Martinal ON-320 (Aluminiumtrihydroxid Al(OH)₃ von Huber Martinswerk, Bergheim) | 50 |

Ein Randverbund BR-Ps ohne kühlende Brandschutzeigenschaften wurde zum Vergleich getestet. Dieser Randverbund BR-Ps war aus reinem Polysulfid. Messwerte der Brandschutzverglasung BR-Ps mit dem Randverbund aus reinem Polysulfid sind in Figur 3 durch leere Kreise dargestellt, welche mit einer gestrichelten Linie verbunden sind.

Wie man sieht, verlaufen die Temperaturzunahmen für die Brandschutzverglasungen aller dreier Randverbünde etwa 5 Minuten lang ziemlich ähnlich. Bis zu Minute 16.5 weist der Randverbund BR-Ps ohne kühlende Brandschutzeigenschaften eine geringere Temperaturzunahme auf. Und danach weist die Brandschutzverglasung BkR mit dem Randverbund mit kühlenden Brandschutzeigenschaften deutlich tiefere Werte von Temperaturzunahmen auf. Nach dreissig Minuten weist die Brandschutzverglasung BkR mit dem erfindungsgemässen Randverbund mit kühlenden Brandschutzeigenschaften erst eine Temperaturzunahme von 132.5 Kelvin auf, das ist eine um 54.75 Kelvin niedrigere Temperaturzunahme als die der Brandschutzverglasungen BR-Ps mit dem Randverbund ohne kühlende Brandschutzeigenschaften.

Die Temperaturzunahme bei der Brandschutzverglasungen BR-Ps beträgt nach 30 Minuten 187.25 Kelvin. Diese Brandschutzverglasung mit dem Randverbund ohne kühlende Brandschutzeigenschaften kann somit mit der getesteten Halterung zusammen keine der Norm EI 30 entsprechende Brandschutzwirkung erzielen, sofern keine weiteren Massnahmen getroffen werden (wie beispielsweise ein Einsetzen von zusätzlichen, aufschäumenden und/oder kühlenden Bändern). Hingegen erlaubt es die vorliegend getestete Variante der erfindungsgemässen Brandschutzverglasung BkR mit dem Randverbund mit kühlenden Brandschutzeigenschaften problemlos, zusammen mit der getesteten Halterung eine der Norm EI 30 entsprechende Brandschutzwirkung zu erzielen, ohne dass zusätzliche Massnahmen getroffen werden müssen.

## Patentansprüche

1. Brandschutzverglasung (1) aus wenigstens zwei Glasscheiben (2), welche durch einen Abstandhalter voneinander beabstandet sind, wobei in einem Zwischenraum zwischen den beiden Glasscheiben (2) ein Brandschutzmaterial (3) und der Abstandhalter (4) angeordnet sind, wobei ein Randverbund (5) das Brandschutzmaterial (3) und den Abstandhalter (4) in dem Zwischenraum umschliesst, **dadurch gekennzeichnet, dass**
der Randverbund (5) eine kühlende Brandschutzeigenschaft aufweist und frei von einer schäumenden Brandschutzeigenschaft ist.

2. Brandschutzverglasung (1) gemäss Anspruch 1, **dadurch gekennzeichnet, dass** im Zwischenraum zwischen den beiden Glasscheiben (2) ausschliesslich das Brandschutzmaterial (3), der Abstandhalter (4) - mit einer optionalen Abstandshalterbefestigung zum Befestigen des Abstandhalters (4) an der Glasscheibe (2) - und der Randverbund (5) angeordnet sind.

3. Brandschutzverglasung (1) gemäss Anspruch 1 oder 2, **dadurch gekennzeichnet, dass** der Randverbund (5) in einem Bereich des Zwischenraums angeordnet ist, welcher an die Stirnseiten der Glasscheiben (2) angrenzt.

4. Brandschutzverglasung (1) gemäss einem der Ansprüche 1 bis 3, **dadurch gekennzeichnet, dass** der Randverbund (5) ein Material umfasst, welches im Brandfall Gas freisetzt und auf diese Weise mindestens einen Teil der kühlenden Brandschutzeigenschaft des Randverbundes (5) erzielt.

5. Brandschutzverglasung (1) gemäss Anspruch 4, **dadurch gekennzeichnet, dass** der Randverbund (5) im Brandfall Gas freisetzt aufgrund eines Zerfalls des Materials des Randverbundes (5).

6. Brandschutzverglasung (1) gemäss Anspruch 4 oder 5, **dadurch gekennzeichnet, dass** der Randverbund (5) im Brandfall Gas freisetzt aufgrund eines Zerfalls von mindestens zwei Materialien des Randverbundes (5), welche voneinander unterschiedliche Gasfreisetzungstemperaturen aufweisen.

7. Brandschutzverglasung (1) gemäss einem der Ansprüche 1 bis 6, **dadurch gekennzeichnet, dass** der Randverbund (5) ein Material mit endothermen Eigenschaften umfasst, welches im Brandfall dank dessen endothermen Eigenschaften Wärmeenergie aufnimmt und auf diese Weise mindestens einen Teil der kühlenden Brandschutzeigenschaft des Randverbundes (5) erzielt.

8. Brandschutzverglasung (1) gemäss einem der Ansprüche 1 bis 7, **dadurch gekennzeichnet, dass** der Randverbund (5) ein synergistisches Material umfasst.

9. Brandschutzverglasung (1) gemäss einem der Ansprüche 1 bis 8, **dadurch gekennzeichnet, dass** der Randverbund (5) ein brandhemmendes Material umfasst, welches einen Anteil an weiterem Material im Randverbund (5) reduziert.
